# EUROPÄISCHE PATENTSCHRIFT

(11) **EP 3 415 290 B1**
(45) Veröffentlichungstag und Bekanntmachung des Hinweises auf die Patenterteilung: **30.10.2019**
(21) Anmeldenummer: 18174987.0
(22) Anmeldetag: 30.05.2018
(51) Int. Cl.: B26D 7/01, B26D 1/143, B26D 1/15

(54) **SCHNEIDEINHEIT SOWIE SCHNEIDVERFAHREN**
CUTTING UNIT AND CUTTING METHOD
UNITÉ DE COUPE AINSI QUE PROCÉDÉ DE COUPE

(30) Priorität: 02.06.2017 DE 102017112177
(43) Veröffentlichungstag der Anmeldung: 19.12.2018
(73) Patentinhaber: TVI Entwicklung und Produktion GmbH, 83737 Irschenberg (DE)
(72) Erfinder: VÖLKL, Thomas, Brückmühl 83052 (DE); MAYR, Martin, 83549 Eiselfing (DE)
(74) Vertreter: Weickmann & Weickmann PartmbB

(56) Entgegenhaltungen:
- CH-A5- 571 939
- DE-A1- 2 224 375
- FR-A5- 2 114 736

## Beschreibung

### I. Anwendungsgebiet

Die Erfindung betrifft eine Schneideinheit zum Abschneiden von Scheiben von einem meist strangförmigen Ausgangsprodukt, etwa einem Lebensmittel-Strang wie etwa einem Wurst-Strang, einem Käse-Strang - dann meist mit über die Länge des Stranges gleichbleibenden Querschnitt - oder einem Frischfleisch-Strang - dann meist mit einem sich in der Länge verändernden Querschnitt.

Häufig sollen die abgetrennten Scheiben dabei ein bestimmtes Soll-Gewicht möglichst genau erreichen.

### II. Technischer Hintergrund

Dabei wird ein Messer quer zur Längsrichtung des Stranges durch dessen Querschnitt hindurch bewegt, dadurch eine Scheibe abgeschnitten, und in Querrichtung wieder zurück bewegt. Vor dem Abschneiden der nächsten Scheibe wird der Strang in Längsrichtung, der Vorschubrichtung, relativ zum Messer vorwärtsgeschoben entlang einer Auflagefläche oder entlang einer Führung bis zu einem Anschlag, insbesondere einer Anschlagplatte, auf der bezüglich des Hauptteiles des Stranges gegenüberliegenden Seite des Messers.

Bei einem hinsichtlich seines Querschnittes ungleichmäßigen Strang kann die Führung auch umfänglich geschlossenes Formrohr sein.

Im Folgenden ist im Rahmen dieser Patentanmeldung nur noch von einer Anschlagplatte die Rede, ohne die Erfindung auf diese Form des Anschlages zu begrenzen. Eine Anschlagplatte muss dabei keine entlang ihrer Hauptebene durchgehend geschlossene Platte, insbesondere nicht mit gleicher Dicke in allen Bereichen, sein, sondern kann durchaus Durchbrüche von einer Hauptfläche zur anderen aufweisen, solange dadurch ihre Funktion als Anschlag weiterhin gegeben ist.

Eine solche Anschlagplatte kann auch Vertiefungen in einer der Hauptflächen, insbesondere der Anlagefläche für den Strang, aufweisen, um insbesondere die Gleitreibung gegenüber dem Fleischstrang zu minimieren. Ebenso kann eine solche Platte beispielsweise als Lochblech oder gitterartig aufgebaut sein.

Die Anschlagplatte bewegt sich dabei i.d.R. zusammen mit dem Messer oszillierend in Querrichtung hin und her. Am Ende des Abtrennvorganges kippt die abgetrennte Scheibe über den dem Messer zugewandten Bereich der Umfangskante der Anschlagplatte, der Funktionskante, vom Messer weg auf eine Auflagefläche.

In Längsrichtung, nämlich entgegen der Vorschubrichtung, betrachtet überlappen die Anschlagplatte und das Messer, bei rotierenden Messern insbesondere der Flugpreis des Messers, in aller Regel nicht, sondern zwischen beiden besteht ein radialer Abstand, damit beim Hindurchbewegen der abgetrennten Scheibe zwischen Anschlagplatte und Messer die Scheibe nur einen möglichst geringen Widerstand überwinden muss.

Hierfür müsste der radiale Abstand möglichst groß sein. Um jedoch ein Hindurchpressen von Strang-Material zu vermeiden, sollte dieser radiale Abstand dagegen möglichst klein sein. In der Praxis wird daher häufig ein akzeptabler Mittelwert von in der Regel 2 mm bis 10 mm gewählt.

Die Dicke der abgeschnittenen Scheibe wird bestimmt durch den axialen Abstand zwischen der Schneidkante des Messers und der Anschlagfläche der Anschlagplatte und ist in aller Regel einstellbar, um die Scheibendicke variieren zu können.

Dabei ist es auch bekannt, dass das Messer nach Abtrennen der Scheibe und vor dem Zurückbewegen in Querrichtung von der Frontfläche des Stranges in Längsrichtung abhebt, um einerseits früher mit dem Vorwärtsschieben des Stranges beginnen zu können und andererseits ein Verschmieren der Rückseite des Messers als auch der Frontfläche des Stranges zu vermeiden.

Es sind unterschiedliche Messerformen einsetzbar, mit denen jeweils ein möglichst ziehender Schnitt erreicht werden soll.

Streifen-förmige oder Balken-förmige, insbesondere gerade, Messer, die für das Schneiden in Richtung ihrer Längserstreckung bewegt werden, besitzen aus Gewichtsgründen meist eine in Eintauch-Richtung in den Strang geringe Breite, jedenfalls geringer als der Querschnitt des Stranges, und müssen dann für das Zurückbewegen nach dem Beenden des Abtrennvorganges zumindest mit ihrer stumpfen rückseitigen Kante auf Abstand zur Stirnfläche des restlichen Stranges gebracht werden, um mit dieser rückwärtigen Kante nicht an der Stirnfläche des Stranges entlang zu schaben.

Selbst bei ausreichender Breite, also größer als der Querschnitt des Stranges, ist dies empfehlenswert um ein Verschmieren sowohl der Rückseite des Messers als auch der vorderen Stirnfläche des Stranges zu vermeiden.

Kreisscheiben-förmige Messer, die um eine Achse, insbesondere um ihre zentrale Achse, rotieren, müssen mit ihrer Achse erst etwa um den Radius des Messers vom Rand des Querschnittes des Stranges in Querrichtung, also radial beabstandet, werden, damit das Vorwärtsschieben des Stranges begonnen werden kann.

Aus den gleichen Gründen wie bei einem Balken-förmigen oder Streifenförmigen Messer empfiehlt sich zusätzlich ein Abheben des Messers nach dem Ende des Abtrennvorganges in Längsrichtung.

Rotierende Sichel-förmige Messer, bei denen der radiale Abstand der Schneidkante zur Rotationsachse im Verlauf der Schneidkante größer wird, und die zu ihrem freien Ende hin insbesondere spitz auslaufen, geraten nach dem Beenden des Abtrennungsvorganges sehr schnell aus der Überdeckung mit dem Querschnitt des Stranges. Jedoch ist ihr Einsatz zusammen mit einer Anschlagplatte, die als Anschlag für den Strang dient, ungünstig:
Denn in Längsrichtung betrachtet soll ja zwischen dem Außenumfang des Messers und der konkav geformten Funktionskante der Anschlagplatte ein axialer Abstand vorhanden sein, der in Verlaufsrichtung dieser Funktionskante möglichst überall gleich breit sein soll.

Bei einem Sichel-förmigen Messer, wäre dies nur zu erzielen, indem in Längsrichtung betrachtet die Anschlagplatte zumindest während des Schneidvorganges zusammen mit dem Sichelmesser verschwenkt wird, aber nicht mit dem Sichelmesser rotiert, um zwischen Ende eines ersten Abtrennvorganges und Beginn eines zweiten Abtrennvorganges für den vorwärtsgeschobenen Strang als Anschlag zu dienen.

Somit erfordert dies einen komplizierten mechanischen Aufbau.

FR-A-2 114 736, DE 22 24 375 und CH-A-571 939 bilden die Grundlage für die Oberbegriffe der Ansprüche 1 und 13, die die Erfindung definieren.

### III. Darstellung der Erfindung

### a) Technische Aufgabe

Es ist daher die Aufgabe gemäß der Erfindung, eine Schneidvorrichtung mit einem Messer und einer Anschlagplatte zur Verfügung zu stellen, die die Formhaltigkeit und Gewichtsgenauigkeit der abgetrennten Scheiben verbessert, sowie ein diesbezügliches Verfahren.

### b) Lösung der Aufgabe

Diese Aufgabe wird durch die Merkmale der Ansprüche 1 und 13 gelöst.

Vorteilhafte Ausführungsformen ergeben sich aus den jeweiligen Unteransprüchen.

Hinsichtlich des Verfahrens zum Abschneiden von Scheiben wird diese Aufgabe dadurch gelöst, dass der radiale Abstand zwischen der Funktionskante der Anschlagplatte und der Schneide des Messers während des Abtrennens der Scheibe verändert wird:
Die Anschlagplatte dient dazu, dass beim Anlegen und Anpressen des Stranges an der Rückseite der Anschlagplatte, vor Beginn des Abtrennens möglichst über die gesamte Stirnfläche des Stranges, verhindert wird, dass einerseits durch den axialen Anpressdruck sich die Querschnittsform des Stranges am vorderen Ende durch Aufweitung vergrößert und andererseits, dass während des Abtrennens das plastisch verformbare Material des Stranges sich nicht in unerwünscht starker Weise durch den Schneidspalt zwischen Messer und Anschlagplatte herausquillt.

Gleichzeitig muss die abgetrennte Scheibe gut durch diesen Schneidspalt hindurchgleiten können und vor allem am Ende des Abtrennvorganges problemlos über die Funktionskante der zu diesem Zweck meist schräg stehenden Anschlagplatte abkippen bzw. herabfallen können.

Erfindungsgemäß wird deshalb der radiale Abstand zwischen Schneide und Anschlagplatte, insbesondere gegen Ende des Abtrennvorganges, vergrößert, sodass die Scheibe nach Möglichkeit ohne Verwerfungen oder Aufwölbungen auf der Auftrefffläche, meist einem Förderband, auftrifft.

Dies kann beispielsweise erreicht werden, indem beim Abtrennen die Geschwindigkeit des Messers in Eintauchrichtung kleiner als die der Anschlagplatte ist.

Die Vergrößerung des radialen Abstandes kann während des Abtrennvorganges oder während eines definierten Zeitbereiches, insbesondere am Ende des Abtrennvorganges, kontinuierlich vergrößert werden.

Für das zur Verfügung stellen eines Anschlages über die gesamte Stirnfläche des Stranges sollte der radiale Abstand, der Ausgangs-Abstand, vor Beginn des Abtrennvorganges möglichst klein sein, insbesondere Null sein, oder die Anschlagplatte kann in radialer Richtung zu Beginn des Abtrennvorganges oder zumindest unmittelbar davor in radialer Richtung sogar leicht mit dem Messer Überlappen, um nicht nur die Stirnfläche des Stranges vollständig abzudecken, sondern über diesen hinaus auch noch vorzustehen.

Falls das Überlappen noch zu Beginn des Abtrennvorganges vorliegt, darf es nur so gering sein, dass die im Überlappungsbereich bereits vorhandene Schneidendicke die Scheibendicke nicht nachteilig beeinflusst. Vorzugsweise erfolgt die Steuerung der Relativlage von Anschlagplatte und Messer so, dass bei Beginn des Abtrennvorganges, also Eintauchen der Schneide in den Strang, keine radiale Überlappung mehr gegeben ist, sondern der radiale Abstand Null ist oder einen positiven Wert aufweist.

Vor Beginn des Eintauchens der Schneide in den Schneidstrang für den nächsten Abtrennvorgang, insbesondere vor Beginn der radialen Annäherungsbewegung des Messers an den Fleischstrang, sollten Messer und Anschlagplatte wieder den vorgesehenen Ausgangs-Abstand relativ zueinander erreicht haben, also alle während des vorhergehenden Abtrennvorganges durchgeführten Veränderungen der Relativlage wieder rückgängig gemacht worden sein.

Vorzugsweise geschieht dies unmittelbar nach Abtrennen der Scheibe, insbesondere falls das Messer nach dem Abtrennen der Scheibe eine Abhebebewegung vom Fleischstrang in axialer Richtung, insbesondere in Vorschubrichtung des Stranges, vollzieht, während oder spätestens nach dem Beenden dieser Abhebebewegung.

Die Rückbewegung der Anschlagplatte relativ zum Messer in Richtung gegenseitigem Ausgangsabstand sollte spätestens beendet sein, wenn der vorwärts geschobene Strang die Anschlagplatte erreicht, und insbesondere wird die Vorschubbewegung des Stranges entsprechend gesteuert.

Falls das rotierende Messer - betrachtet in axialer Richtung - eine Kontur besitzt, die unrund ist, sich jedoch nur entlang oder innerhalb des Flugkreises erstreckt, kann die Rückbewegung der Anschlagplatte in die Ausgangsposition sogar bereits beginnen, sobald der Querschnitt des Messers nicht mehr mit dem Querschnitt des Stranges in axialer Richtung überlappt, unabhängig davon, ob der Flugkreis des Messers noch mit dem Querschnitt des Stranges überlappt, also insbesondere noch bevor das Messer in Querrichtung soweit zurück verfahren ist, dass der Abstand zwischen Rotationsachse des Messers und dem Strang-Querschnitt größer ist als der Radius des Messers.

Hinsichtlich der Schneideinheit wird die Aufgabe mit einer Schneideinheit gemäss Anspruch 1 gelöst.

Vorzugsweise ist diese Richtung eine radiale Richtung bezüglich der Rotationsachse eines rotierenden Messers.

Ferner ist eine, vorzugsweise elektronische, Steuerung vorhanden, die in der Lage ist, diesen radialen Abstand zu steuern, insbesondere auch während des Abtrennens einer Scheibe zu steuern, also im Betrieb der Schneideinheit.

Die Anschlagplatte ist relativ zum Messer so positioniert, dass sie betrachtet in axialer Richtung eines rotierenden Messers und / oder in Vorschubrichtung des Fleischstranges und des diesen bewegenden Strangschiebers - der nicht zwingend vorhanden sein muss - sich mehrheitlich radial außerhalb des Flugkreises des Messers, insbesondere des Flugkreises der Schneidkante, insbesondere des Messers selbst, befindet.

Die Anschlagplatte kann, vor allem vor Beginn des Abtrennvorganges, geringfügig mit seiner Funktionskante in radialer Richtung den Flugkreis des Messers oder gar das Messers selbst überlappen, insbesondere maximal um einen Betrag, der höchstens 50%, besser höchstens 30%, besser höchstens 20% der radialen Erstreckung der sich nach radial Innen verdickenden Schneide beträgt.

Dadurch ist eine optimale Abstützung des Stranges gewährleistet.

Als Messer kommen sowohl rotierende Messer als auch oszillierende Messer, beispielsweise balkenförmige oszillierende Messer, zum Einsatz in einer erfindungsgemäßen Schneideinheit in Frage.

Bei einem rotierenden Messer wird - in axialer Richtung, der Richtung der Rotationsachse des Messers, betrachtet - die Umfangskante wenigstens über einen Schneidkantenbereich als Schneide ausgebildet sein, egal ob dieser Schneidkantenbereich die Form eines Kreissegmentes oder die Form einer in einer Ebene liegenden Spirale aufweist, also sichelförmig gestaltet ist.

Der der Rotationsachse des Messers zugewandte Umfangsbereich der Anschlagplatte, die sogenannte Funktionskante, ist dann in aller Regel konkav gestaltet mit einem Krümmungsradius, der vorzugsweise gleich oder etwas größer als der Krümmungsradius des Flugkreises des Messers ist.

Der Krümmungsradius der konkaven Funktionskante sollte - sofern er nicht gleich dem Krümmungsradius des Flugkreises des Messers ist - einen um höchstens 20%, besser höchstens 10%, besser höchstens 5% davon abweichenden, insbesondere größeren, Krümmungsradius aufweisen, um während des Abtrennvorganges eine ausreichende Stützfunktion für den aufzuschneidenden Strang zu erfüllen.

Darüber hinaus ist die Anschlagplatte natürlich in Vorschubrichtung des Stranges, insbesondere in axialer Richtung eines rotierenden Messers, einstellbar hinsichtlich des axialen Dickenabstandes zur Messerebene, wodurch die Dicke der abzuschneidenden Scheibe bestimmt wird.

Die Anschlagplatte steht vorzugsweise in Rotationsrichtung des Messers, also in Umfangsrichtung des Flugkreises des Messers, still und bewegt sich mit dem Messer synchron oder auch nicht synchron, aber in der gleichen eintaucht-Richtung, in Querrichtung zur Rotationsachse des rotierenden Messers und/oder der Vorschubrichtung des Stranges mit dem Messer mit.

Vorzugsweise ist die Schneide an dem meist plattenförmigen Messer nur einseitig angeschliffen, wobei insbesondere die angeschliffene Seite der Anschlagplatte zugewandt ist.

Die Schneideinheit kann ferner eine Strangführung zum Zuführen des Stranges in Vorschubrichtung des Stranges, aufweisen sowie einen Strangantrieb zum Bewegen des Stranges entlang der Strangrichtung in Vorschubrichtung auf das Messer zu. Die Strangführung ist vorzugsweise am Grundgestell befestigt.

Die Strangführung endet mit ihrem in Zufuhrrichtung vorderen Ende auf der der Anschlagplatte gegenüber liegenden Seite des Messers und erstreckt sich von dort zum hinteren Ende der Strangführung.

Die Strangführung kann lediglich aus einer Auflagefläche für den aufzuschneidenden Strang bestehen, oder den Strang umfänglich teilweise oder vollständig umschließen in Form eines Führungsrohres.

Der Strangantrieb kann einen linear in Verlaufsrichtung der Strangführung beweglichen Strangschieber umfassen, der dann hinter dem hinteren Ende des Fleischstranges angeordnet ist und entweder diesen lediglich vorschiebt oder auch Greiforgane zum Ergreifen und Festhalten des Stranges aufweist, mit denen der Strang einerseits vorwärts geschoben werden kann, andererseits aber von einem Abheben von dem Strangschieber gehindert werden kann.

Bei ausreichender Neigung der Auflagefläche kann der Strang jedoch auch lediglich aufgrund seines Eigengewichts vorwärts gleiten oder indem die Auflagefläche als Förderer in Richtung Anschlagplatte und Schneideinheit ausgebildet ist.

Bei einem rotierenden Messer ist die Rotationsachse des Messers so positioniert und in Querrichtung hierzu so beweglich, dass das, insbesondere plattenförmige, Messer
- einerseits in einer Schneidstellung betrachtet in axialer Richtung des Messers den Querschnitt des zugeführten Stranges, also insbesondere den Querschnitt des Führungsrohres, vollständig abdecken kann und
- andererseits in einer Vorschubstellung vollständig außerhalb dieses Querschnittes angeordnet werden kann.

Die Anschlagplatte dagegen ist - betrachtet in Längsrichtung oder hinzu Vorrichtung - so angeordnet und in Querrichtung hierzu, insbesondere in Eintauchrichtung des Messers, so beweglich, dass sie
- in der Vorschubstellung mit dem Querschnitt des zugeführten Stranges, insbesondere dem Führungsrohr, zumindest teilweise, vorzugsweise vollständig überlappt und
- andererseits in der Schneidstellung mit diesem Querschnitt höchstens teilweise, spätestens unmittelbar nach Abtrennen der Scheibe überhaupt nicht mehr, überlappt.

Je nach Messerform, insbesondere bei balken- oder stangenförmigen Messern, ist es bekannt, dass das Messer nach Beenden der Abtrennung einer Scheibe in Längsrichtung von der Stirnfläche des Stranges abgehoben wird, um bereits nach Beginn dieser Abhebe-Bewegung mit dem Vorwärtsschieben des Stranges in Richtung Anschlagplatte beginnen zu können.

Dies ist bei der vorliegenden Erfindung ebenso einsetzbar wie eine Messerform eines rotierenden Messers, bei dem das Messer nicht über den Flugkreis des Schneidkantenbereiches des Messers vorsteht, sodass in den Umfangsbereichen, in denen die Umfangskante des Messers von der Rotationsachse einen geringeren Abstand besitzt als im Schneidkantenbereich, die Möglichkeit besteht, den Fleischstrang vorwärts zu schieben, unmittelbar nachdem - in Vorschubrichtung betrachtet - die in Rotationsrichtung des Messers hintere Kante des Schneidkantenbereiches den Querschnitt des Stranges, insbesondere des Führungsrohres, verlassen hat.

In im Fall eines solchen unrunden Messers ist eine axiale Abhebebewegung des Messers in aller Regel verzichtbar.

### c) Ausführungsbeispiele

Ausführungsformen gemäß der Erfindung sind im Folgenden beispielhaft näher beschrieben. Es zeigen:
- **Figur 1:**: im Längsschnitt durch einen Produkt-Strang eine erste Bauform der Schneideinheit in einer Funktionsstellung zur Erläuterung der unterschiedlichen definierten Richtungen,
- **Figur 1a - d:**: im Längsschnitt durch einen Produkt-Strang eine zweite Bauform der Schneideinheit in unterschiedlichen Funktionsstellungen beim Abtrennen einer Scheibe,
- **Figur 2a - d:**: im Längsschnitt durch einen Produkt-Strang eine dritte Bauform der Schneideinheit in unterschiedlichen Funktionsstellungen beim Abtrennen einer Scheibe,
- **Figur 3a - f:**: in axialer Richtung des rotierenden Messers betrachtet eine Schneideinheit mit Messer, Anschlagplatte und Formrohr in unterschiedlichen Dreh- und Eintauch-Lagen des Messers.

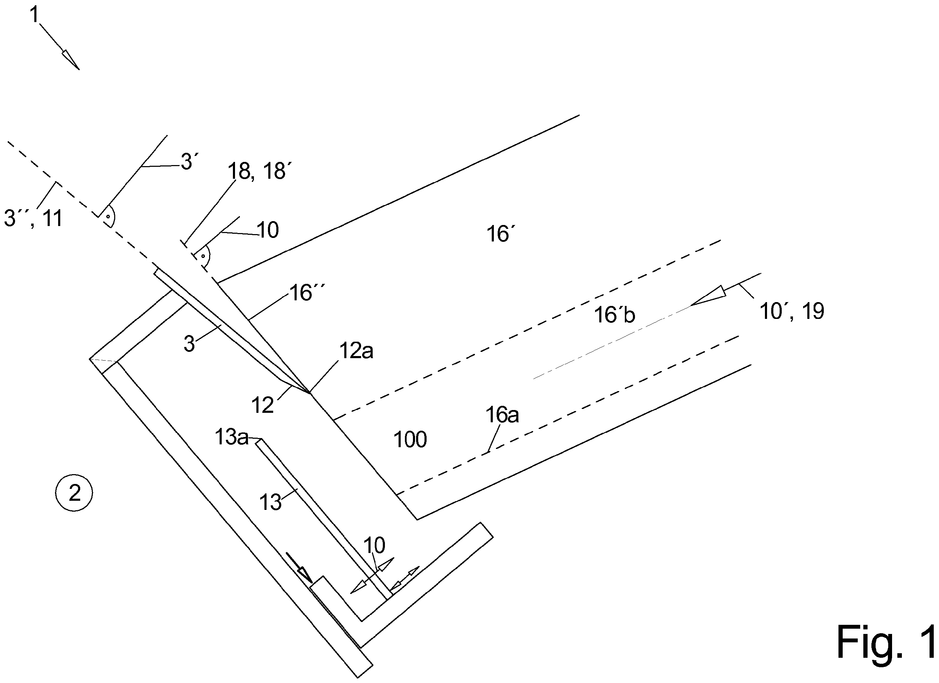

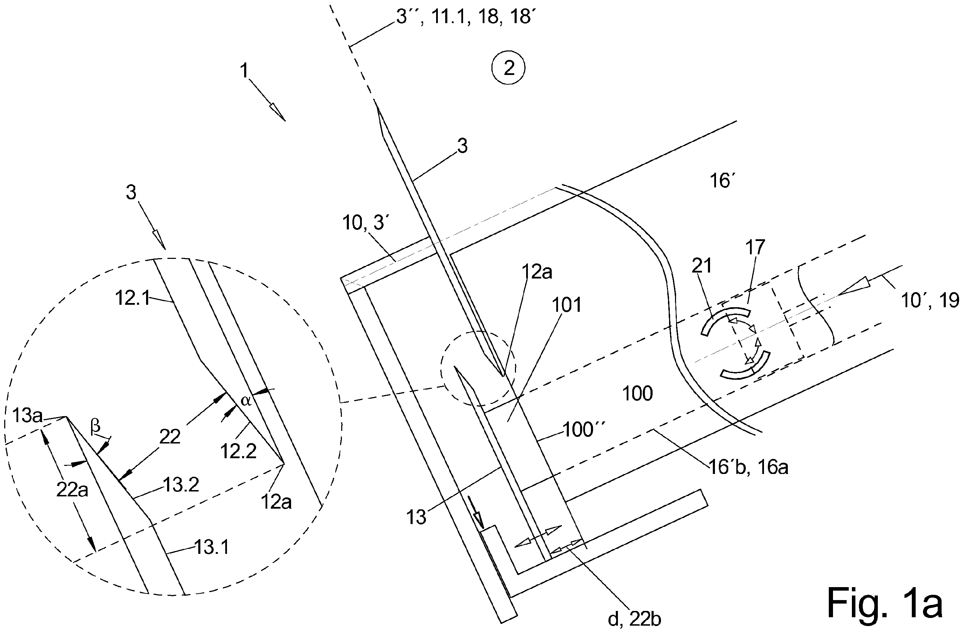

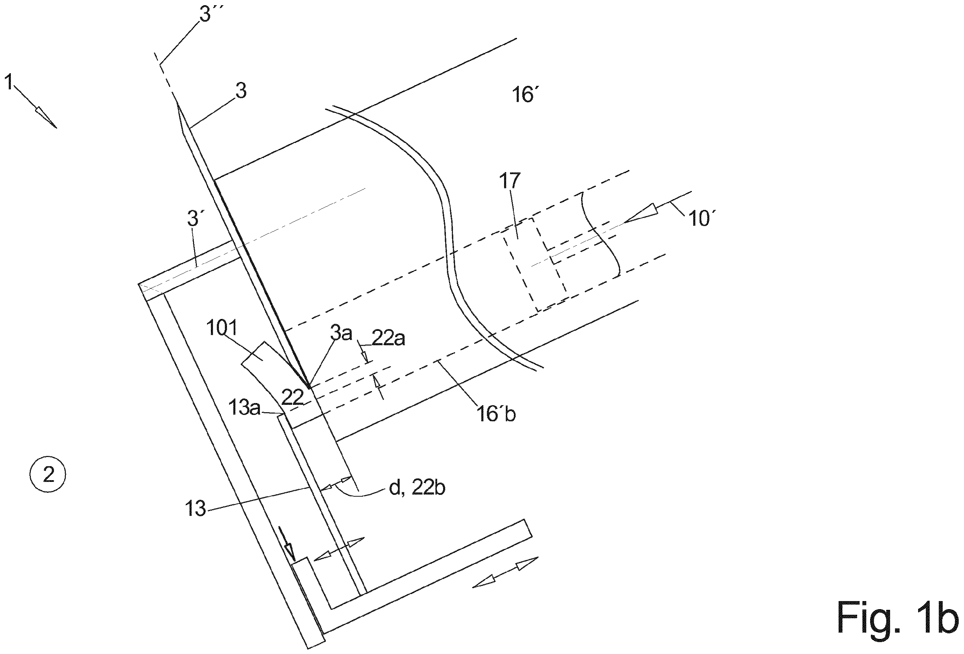

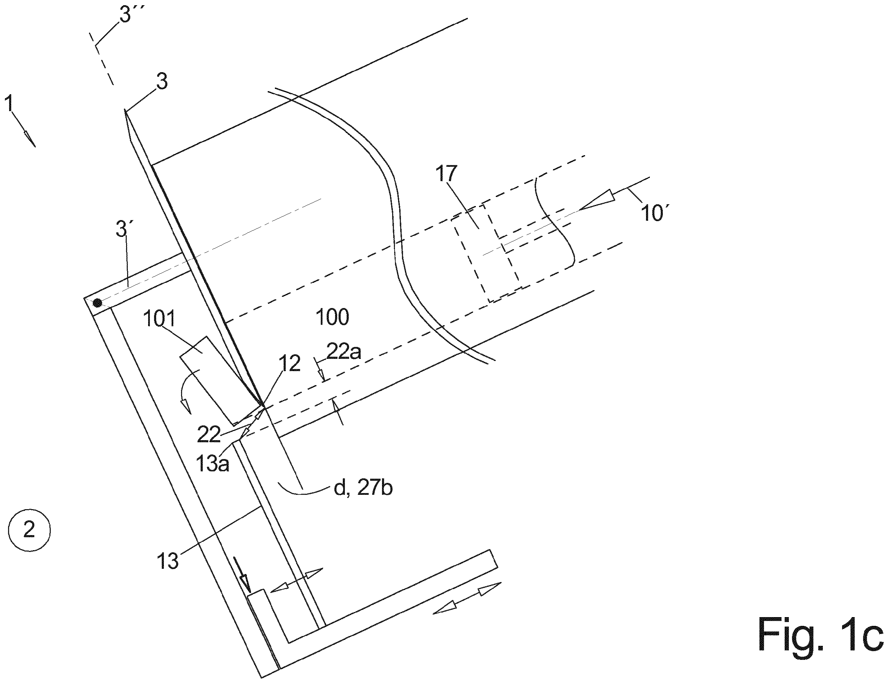

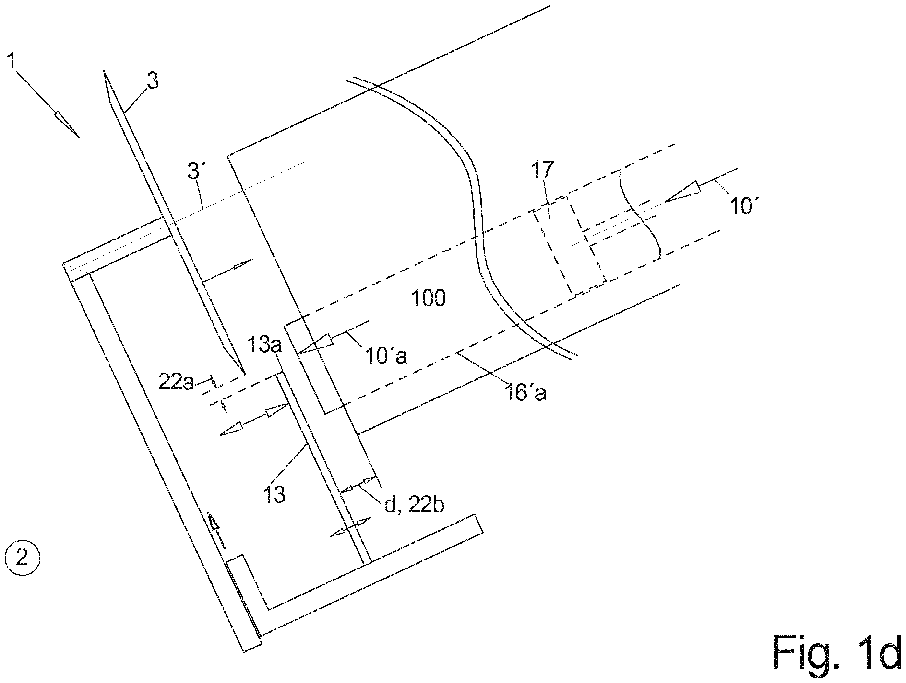

Zunächst zeigt **Figur 1** in einer Seitenansicht - analog zu der Ansicht der Figur 1a bis 2d - einen Längsschnitt durch ein Formrohr und eine erste Bauform einer Schneideinheit 1, lediglich um die verschiedenen dabei vorkommenden Lagen von Richtungen und Ebenen klarzustellen:
Der Produktstrang 100 wird auf eine Auflagefläche 16a, vorzugsweise in einem Formrohr 16' mit umfänglich geschlossenen Querschnitt, in Zufuhr-Richtung 10', die meist die Haupt-Erstreckungsrichtung des Produktstranges 100 ist, bewegt, wobei die in Richtung auf das vordere, offene Ende des Formrohres 16', an dem sich das Messer 3 zum Abschneiden von Scheiben 101 befindet, die Vorschub-Richtung 10' ist.

Das hier dargestellte Messer 3 ist ein streifenförmiger Messer 3, welches eine gerade Schneidkante 12a besitzt und in Richtung dieser Schneidkante 12a oszillierend angetrieben ist, um die gewünschte Schneidwirkung zu erzielen.

Die vorzugsweise nur einseitig, nämlich nur auf der vom Formrohr 16' abgewandten Seite, angeschliffene, gerade Schneide 12 des Messers 3 taucht zum Abtrennen einer Scheibe 101 in einer Eintauchrichtung 18 in den Querschnitt 100" des Formrohres 16' und damit des Produkt-Stranges 100 ein, und bewegt sich damit in einer Eintauch-Ebene 18 und durchläuft diesen vollständig, wodurch die Scheibe 101 abgetrennt wird. Anschließend bewegt sich das Messer in Rückzugsrichtung 18', die entgegen der Eintauchrichtung 18 gerichtet ist, wieder zurück in die Ausgangslage.

Dabei bewegt sich das Messer 3, zumindest dessen Schneidkante 12a, möglichst nah entlang der vorderen Stirnfläche 16" des Formrohres 16', jedoch möglichst ohne diese zu berühren, weshalb diese Frontfläche 16' des Formrohres 16' parallel einerseits zu Eintauchrichtung 18 und andererseits zur in Blickrichtung der **Figur 1** verlaufenden Erstreckungsrichtung der Schneidkante 12a der Schneide 12 verläuft.

Diese Eintauchrichtung 18 verläuft hier nicht im rechten Winkel zur Zufuhr-Richtung 10', beispielsweise weil ovale Scheiben von einem runden Querschnitt 100" abgetrennt werden sollen.

Die Eintauchrichtung 18 liegt hier auch nicht in oder parallel zur Hauptebene 3" des Messers 3, was beispielsweise dann möglich ist, wenn das Messer 3 wie hier dargestellt ein streifenförmiger Messer ist, welches in Richtung seiner Schneidkante 12a oszillierend angetrieben ist, um die gewünschte Schneidwirkung zu erzielen. Die Lotrechte auf der Hauptebene 3" des Messers 3 ist die Messer-Lotrechte 3', bei einem rotierenden Messer ist dies meist gleichzeitig die Rotationsachse des Messers 3.

Die Hauptebene 3" ist diejenige Ebene, in der das meist plattenförmige Messer 3 seine beiden größten Erstreckungsrichtungen aufweist.

Bei dieser ersten Bauform der Schneideinheit ist das Messer 3, etwa oszillierend antreibbar, an einem Schneidgestell beweglich befestigt.

Die Schneideinheit 1 umfasst ferner als Anschlag für den über das vordere freie Ende 16" des Formrohres 16' hinausgeschobenen Produktstrang 100 eine Anschlagplatte 13 auf, deren gegen das Formrohr 16' gerichtete Anschlagfläche 13.1 parallel zur Eintauchrichtung 18 und damit auch zur Frontfläche 16" des Formrohres 16' verläuft, falls ein solches vorhanden ist.

Die Anschlagplatte 13 befindet sich bezüglich der Messerebene 3" auf der dem Formrohr 16' gegenüberliegenden Seite.

Die Anschlagplatte 13 ist in Längsrichtung 10, die sowohl die Lotrechte zur in der Regel ebenen Anschlagfläche 13.1 als auch die Lotrechte auf die Eintauchebene - welche aufgespannt wird von der Eintauchrichtung 18 und der Verlaufsrichtung der Schneidkante 12a - ist, beweglich, um die Scheibendicke d vorzugeben.

Zusätzlich ist die Anschlagplatte 13 oder der auch gegebenenfalls anders gestaltete Anschlag 13 in Eintauchrichtung 18 verstellbar, um den Spalt 22 zwischen der dem Messer 3 zugewandten Funktionskante 13a der Anschlagplatte 13 und der Schneidkante 12a der Schneide 12 des Messers 3 verändern zu können, auch während der Schneidbewegung.

Die **Figuren 1a bis 2d** zeigen in der gleichen Blickrichtung wie Figur 1 eine zweite sowie eine dritte, gegenüber der ersten Bauform einfacher gestaltete, Bauform einer Schneideinheit 1 in unterschiedlichen Funktionsstellungen des Messers 3 sowie der Anschlagplatte 13, einerseits relativ zueinander sowie andererseits zum Produkt-Strang 100, also zur Frontfläche 16" des Formrohres 16' oder wenigstens zur Auflagefläche 16 für den Produkt-Strang 100:
Das Messer 3 ist dabei ein rotierendes - vorzugsweise kreisscheibenförmiges - Messer 3, welches in den unterschiedlichen Funktionsstellungen beim Abschneiden einer Scheibe 101 von einem Produktstrang 100, der vollständig umschlossen in einem Form-Hohlraum 16' eines Formrohres 16' in Zufuhrrichtung 10' verschiebbar geführt sind, dargestellt ist.

Dabei definiert die Rotationsachse 3' des Messers 3 - dessen Messerebene 3" nunmehr parallel zur Eintauchrichtung 18 verläuft - die axiale Richtung 10, die somit auch gleichzeitig die Messer-Lotrechte 3' des Messers 3 ist, und die in diesem Fall parallel zur Zufuhr-Richtung 10' des Produkt-Stranges 100 verläuft, die gleichzeitig die Erstreckungsrichtung der Auflagefläche 16a und des gesamten Formrohres 16' ist.

Es ist zu erkennen, dass in dem rohrförmigen, zumindest vorne offenen, Form-Hohlraum des Formrohres 16' mit einer unteren Auflagefläche 16a der darin befindliche Produktstrang 100 von einem Strangschieber 17, der von einem Strangantrieb 19 angetrieben wird, von seinem hinteren Ende aus in Zufuhrrichtung 10' vorgeschoben wird bis zum Anschlag an die Rückseite, die Anschlagfläche 13.1, der Anschlagplatte 13, die sich in axialer Richtung 10 im Abstand vor dem Formrohr 16' und vor der Messerebene 3" befindet.

Die Anschlagfläche 13.1 der Anschlagplatte 13 verläuft vor der vorderen Stirnfläche 16" des Formrohres 16', und nimmt dadurch zum Messer 3 einen axialen Abstand 22b ein, der die Dicke d der abzutrennenden Scheibe 101 definiert.

Am vorderen Ende des Strangschiebers 17 können Greiforgane 21 vorhanden sein, die das hintere Ende des Produktstranges 100 halten und am Abheben von der Frontfläche des Strangschiebers 17 hindern.

Dabei ist die Anschlagplatte 13 - auch während des Abtrennvorganges - in Richtung 18/18' relativ zum Messer 3 verstellbar.

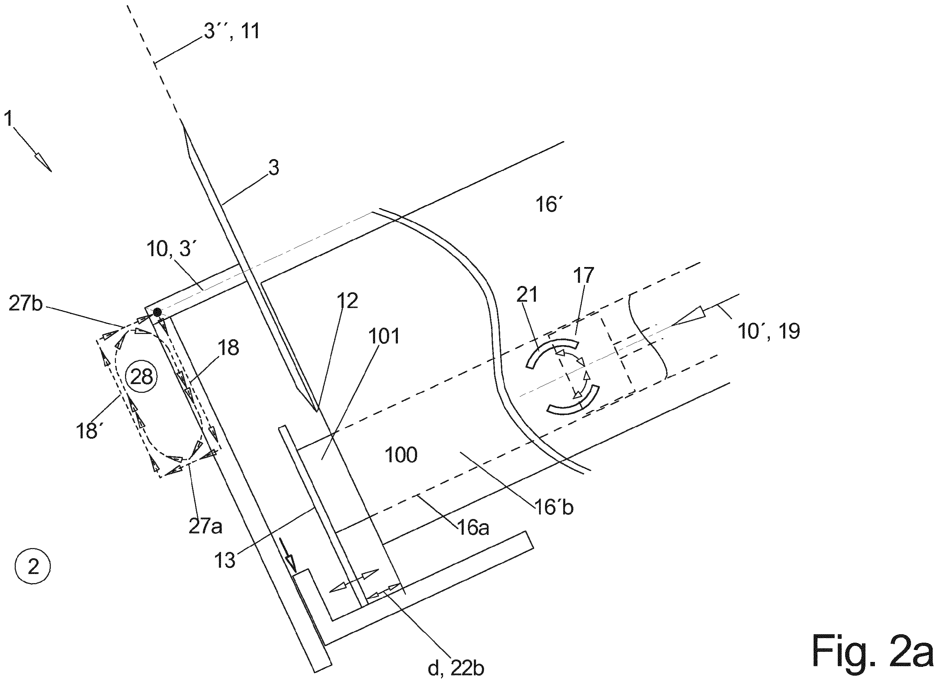

In der dritten Bauform der **Figuren 2a** **- d** ist die Anschlagplatte 13 in axialer Richtung 10 nicht nur vor Beginn des Aufschneiden eines Produktstranges relativ zum Messer 3 verstellbar für das Festlegen der Dicke d der herzustellenden Scheiben 101, sondern auch während jedes einzelnen Abtrennvorganges.

Wenn wie dargestellt Messer 3 und Anschlagplatte 13 an dem Schneidgestell der Schneideinheit 1 befestigt sind, sollte die Anschlagplatte 13 auch während der einzelnen Abtrennvorgänge, nicht nur vor Beginn eines Aufschneidevorganges, in Richtung 18/18' gesteuert am Schneidgestell beweglich befestigt sein. In axialer Richtung 10 ist die Anschlagplatte 13 dann relativ zum Schneidgestell immer einstellbar zum Festlegen der Dicke d einer Scheibe 101.

In den **Figuren 1a bis 2b** ist das rotierende Messer 3 mit seiner Messerachse 3' drehbar, jedoch ortsfest im Schneidgestell gelagert, so dass alle Messerbewegungen außer der Messer-Rotation von Schneidgestell und Messer 3 gemeinsam vollzogen werden, wie insbesondere in den Figuren 2a bis 2 die ersichtlich. Das Schneidgestell seinerseits ist beweglich am Grund gestellt 2 der Maschine befestigt.

Alternativ könnte das Schneidgestell auch weggelassen werden, und das Messer 3 einerseits und die Anschlagplatte 13 andererseits unabhängig voneinander direkt am Grundgestell 2 befestigt sein.

In der dritten Bauform der **Figuren 2a bis 2d** ist eine Bewegung der Anschlagplatte 13 in axialer Richtung 10 auch während des Abtrennvorganges gesteuert möglich. Hierfür ist ein entsprechender Antrieb und eine entsprechende Steuerung vorhanden.

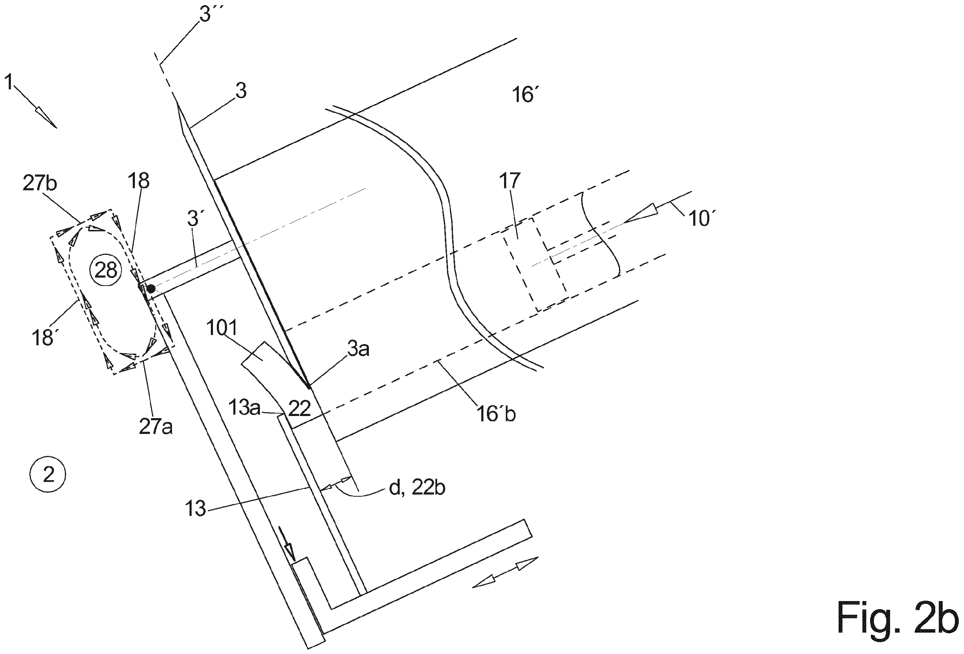

Zum Abtrennen der Scheibe 101 bewegt sich in den **Figuren 1a bis 2d** das rotierende Messer 3 mit seiner Rotationsachse 3' in Eintauchrichtung 18, also in Richtung des aus dem Formrohr 16' vorstehenden Produktstranges 100 (**Figur 1a****/****2a**) und taucht in diesen Querschnitt 100" des Fleischstranges ein (**Figur 1b****/****2b**) und trennt damit den über das Formrohr 16' vorstehenden Teil des Produktstranges 100 zunehmend als Scheibe 101 ab, die sich dabei durch den Spalt 22 zwischen Messer 3 und Funktionskante 13a der Anschlagplatte 13 hindurchschiebt.

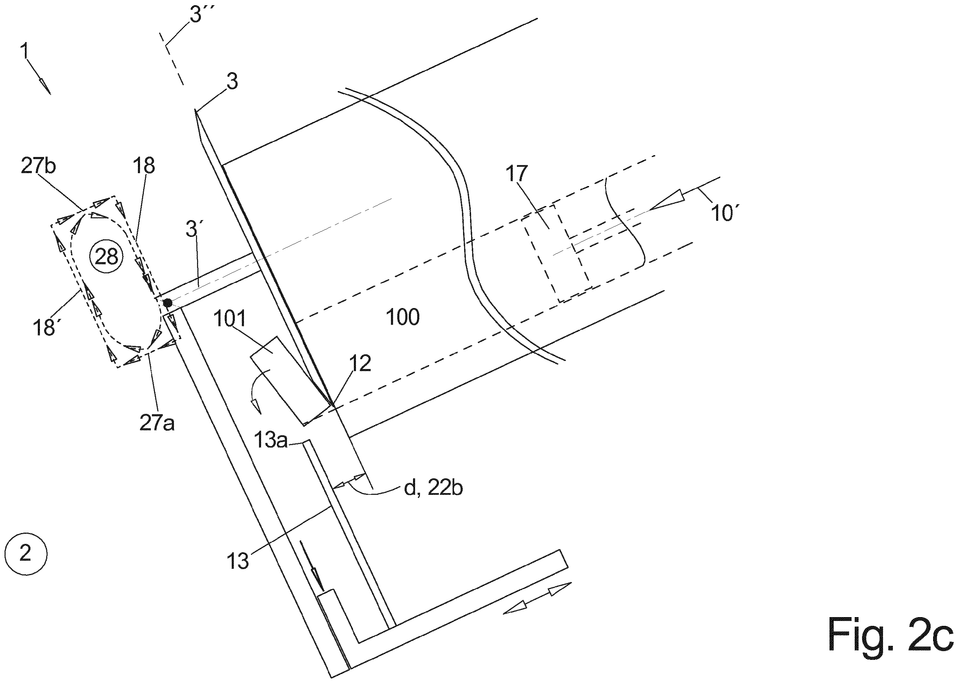

Wenn die Schneide 12 des Messers 3 den Produktstrang 100 vollständig durchtrennt hat, kippt die abgetrennte Scheibe 101 über die dem Messer zugewandte Funktionskante 13a der Anschlagplatte 13 nach unten aufgrund der nach vorne unten gerichteten Neigung des Formrohres 16' **(****Figur 1c****/****2c****)** und fällt auf eine nicht dargestellte Ablagefläche oder einen Abförderer.

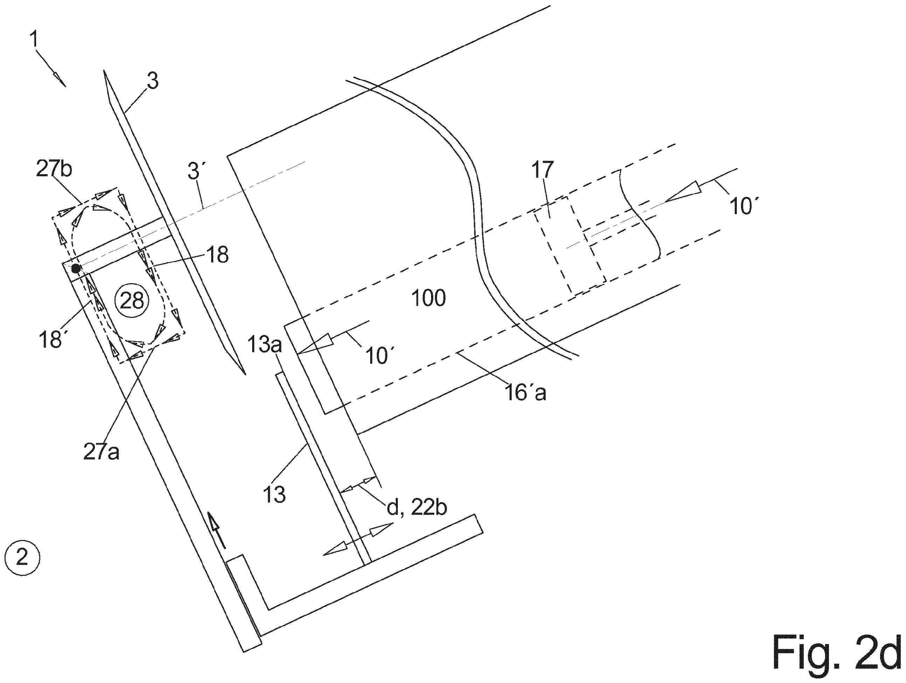

Gleichzeitig oder unmittelbar anschließend wird das Schneidgestell und mit ihm das Messer 3 entgegen der Eintauchrichtung 18 in Rückzugs-Richtung 18' zurückbewegt (**Figur 1d****/****2d**) in die Ausgangslage und der Produktstrang 100 vom Strang-Schieber 17 über die Frontfläche 16" hinaus in Richtung Anschlagplatte 13 - die nunmehr zumindest teilweise wieder den Querschnitt 100" abdeckt - vorwärts geschoben bis zur Anlage an der Kontaktfläche 13a der Anschlagplatte 13.

Wie zu erkennen, ändert sich dabei auch der radiale Abstand 22a zwischen der Funktionskante 13a und der Schneidkante 12a, wobei zu unterscheiden ist, ob die ebene Anschlagfläche 13.1 mit der Funktionskante 13a endet (**Figur 1b** - **2d**) oder sich an die ebene Anschlagfläche 13.1 noch eine davon nach außen zunehmend zurückweichende Schräge 13.2 anschließt, deren freies Ende dann die Funktionskante 13a bildet (**Vergrößerung in** **Figur 1a**):
Im erstgenannten Fall ist unmittelbar vor dem Eintauchen des Messers in den Querschnitt 100" gemäß **Figur 2a** der radialen Abstand 22a vorzugsweise etwa Null und vergrößert sich mit zunehmendem Eintauchen(**Figur 1b****/****2b**), so dass er zum Zeitpunkt des vollständigen Abtrennens der Scheibe 101 gemäß **Figur 1c****/****2c** am größten ist und sich mit Einsetzen der Rückzugsbewegung 18' der Anschlagplatte 13, insbesondere des gesamten Schneidgestells (**Figur 1d****/****2d**) wieder verkleinert.

Im zweitgenannten Fall können - betrachtet in axialer Richtung 10 - unmittelbar vor Beginn des Eintauchens in den Querschnitt 100" (**Figur 1a**) Messer 3 und Anschlagplatte 13 noch überlappen, insbesondere soweit, dass die Schneidkante 12a des Messers 3 noch innerhalb der ebenen Anschlagfläche 13.1, also nicht einmal im Bereich der dem Messer 3 zugewandten Schräge 13.2, der Anschlagplatte liegt.

Es liegt also eine Überlappung, somit ein negativer radialer Spalt 22a, vor, wobei sich auch hier mit zunehmendem Eintauchen diese Überlappung verringert und spätestens unmittelbar nach dem vollständigen Abtrennen der Scheibe 101 (**Figur 1c**) diese Überlappung auf Null reduziert ist oder ein tatsächlicher, also positiver, radialer Spalt 22a vorliegt.

Dabei ist zu beachten, dass der Plattenwinkel β zwischen der Schräge 13.2 der Anschlagplatte 13 und der ebenen, der Anschlagfläche 13.1 gegenüberliegenden, Frontseite der Anschlagplatte 13 gleich oder vorzugsweise geringer sein sollte als der Messerwinkel α zwischen der schrägen Schneide 12 und der ebenen, dem Formrohr 16' zugewandten Rückseite des Messers 3, damit der zwischen der Schräge 12.2 der Schneide 12 und der Schräge 13.2 der Anschlagplatte 13 sich nach außen öffnende Spalt 22 in seinem Verlauf breiter wird.

Zusätzlich hebt nur in der dritten Bauform der **Figuren 2a bis 2d** das Messer 3, sobald das vollständige Durchtrennen des Produktstranges 100 vollzogen ist, in einer Abhebebewegung 27a, vorzugsweise in axialer Richtung 10, von der vorderen Stirnfläche 16" des Formrohres 16' weiter ab, vor oder gleichzeitig mit oder anschließend nach der Rückzugsbewegung 18'.

Wie insbesondere die **Figur 2d** zeigt, bewirkt dies, dass mit Beginn der Abhebebewegung 27a der Strang 100 bereits weiter vorwärts geschoben werden kann über das vordere Ende des Formrohres 16' hinaus.

Während oder nach Beenden der Rückzugsbewegung 18' wird das Messer 3 entgegen der Abhebebewegung 27a in einer Anlagerichtung 27b, vorzugsweise in Längsrichtung 10, auf das Formrohr 16' zu bewegt, bis es die Ausgangslage gemäß **Figur 2a** erreicht hat.

Dadurch vollzieht - in dieser Seitenansicht betrachtet - das Messer 3 eine ringförmig geschlossene, beispielsweise rechteckige oder ovale, Umlaufbewegung 28, die einen früheren Beginn der Vorschubbewegung des Produkt-Stranges 100 nach dem Abtrennen jeder Scheibe 101 ermöglicht und damit die Verringerung der Tot-Zeiten zwischen zwei Abtrennvorgängen.

Diese Abhebebewegung 27a und damit die Umlaufbewegung 28 wird jedoch von der Anschlagplatte 13 vorzugsweise nicht mit vollzogen, sondern diese bewegt sich mit dem Messer 3 nur in Eintauchrichtung 18 und Rückzugsrichtung 18' - allerdings in der Regel nicht synchron, wie anhand der **Figuren 1a** **bis d** erläutert -, da sie ja auch während der Abhebebewegung 27a und vor allem der Anlagebewegung 27b bereits als Anschlag für den vorgeschobenen Fleischstrang 100 zur Verfügung stehen muss.

Da das Messer 3 rotierbar an dem Schneidgestell befestigt ist, vollzieht nicht nur das Messer 3, sondern vorzugsweise das gesamte Schneidgestell die beschriebene Umlaufbewegung 28.

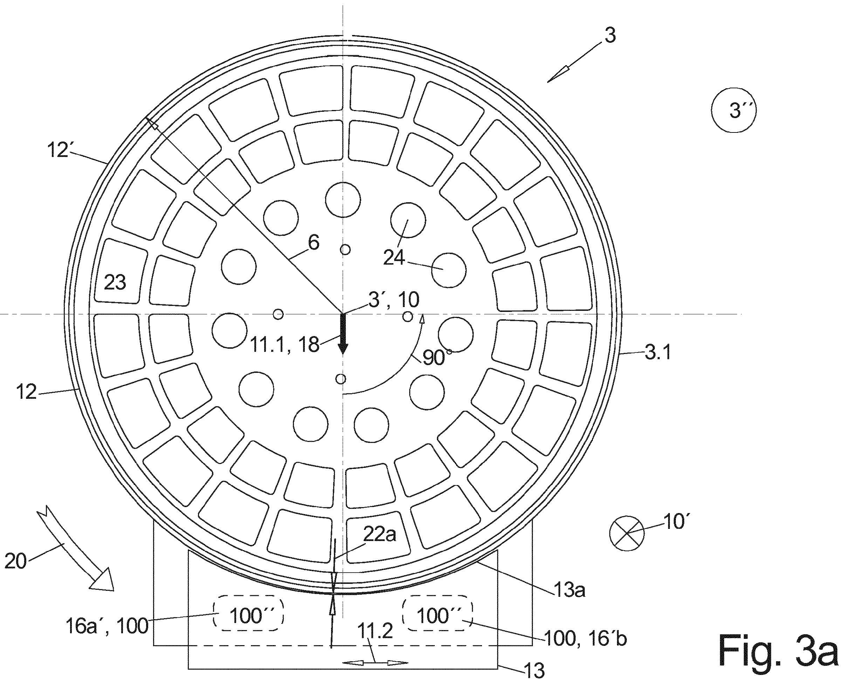

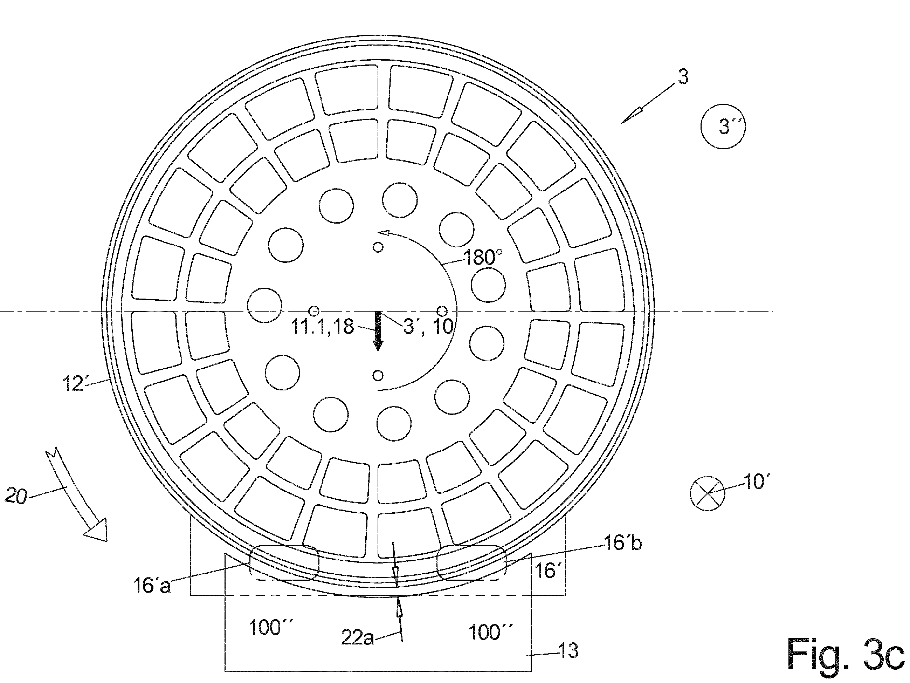

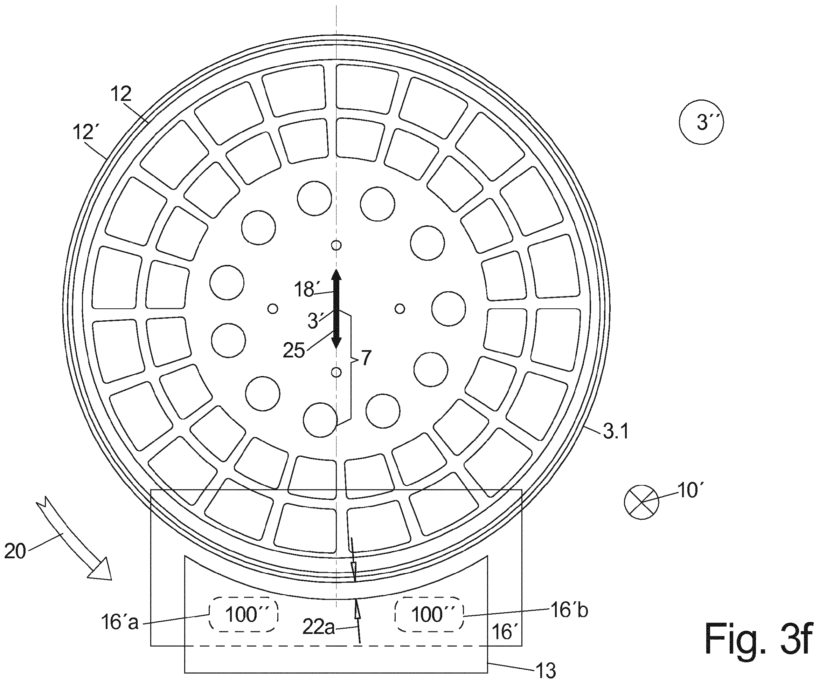

Der axiale Abstand 22b bleibt während des Abtrennvorganges vorzugsweise gleich, und wird in der Regel nur vor Beginn des Aufschneidens eines Produktstranges 100 einmal eingestellt zum Festlegen der Dicke d einer Scheibe, oder höchstens zwischen den Abtrennvorgängen, aber in aller Regel nicht während eines Abtrennvorganges
In den **Figuren 3a bis 3f** ist der Abtrennvorgang, also die Eintauchbewegung des Messers 3 - betrachtet in der axialen Richtung 10 des Messers 3, die gleichzeitig die Zufuhr-Richtung 10' der Produktstränge 100 ist - dargestellt für den oben erwähnten erstgenannten Fall, also mit einer nicht angeschrägten Anschlagfläche 13.1 der Anschlagplatte 13, wie auch in den **Figuren 1b bis 2d** dargestellt:
Die Funktionskante 13a, der in dieser Ansicht dem Messer 3 zugewandte Teil des Umfanges der Anschlagplatte 13, liegt dabei höchstens auf, ansonsten immer in einem radialen Abstand 22a außerhalb des Flugkreises 3.1 des Messers 3, wobei die Funktionskante 13a konkav ausgebildet ist mit einem Krümmungsradius, der gleich oder etwas größer ist als der Krümmungsradius 6 der Schneidkante 12a der Schneide 12 entsprechend dem geringen radialen Abstand 22a zwischen Flugkreis 3.1 und der Funktionskante 13a, da in einer der dargestellten Funktionsstellungen, meist der Ausgangslage gemäß **Figur 3f****,** der Krümmungsmittelpunkt der Funktionskante 13a auf der Rotationsachse 3' des Messers 3 liegt.

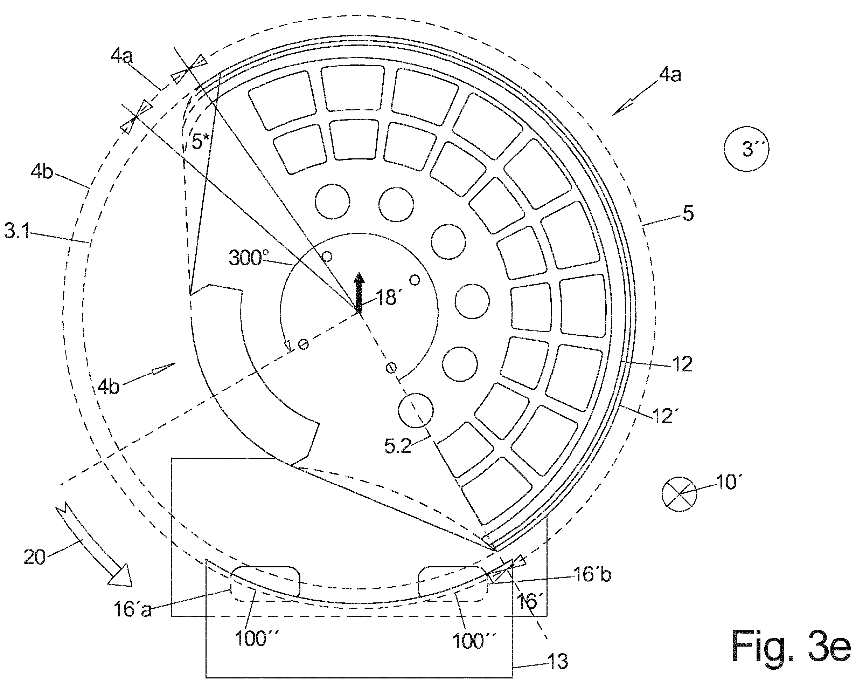

Das plattenförmige Messer 3 ist - außer in **Figur 3e** - als kreisscheibenförmiges Messer 3 dargestellt, mit Vertiefungen 23 für eine Gewichtsersparnis auf der Vorderseite des plattenförmigen Messers 3 sowie Durchgangsbohrungen 24, die insbesondere das Ergreifen des Messers 3 erleichtern sollen, und die vorzugsweise jeweils auf Kreisringen um die Messerachse 3' herum angeordnet sind.

In diesem Fall sind in dem Formrohr 16' parallel nebeneinanderliegend 2 Form-Hohlräume 16'a, 16'b ausgebildet, und sowohl das Messer 3 als auch die Anschlagplatte 13 sind in Breiten-Richtung, der zweiten Querrichtung 11.2, in der die beiden Form-Hohlräume 16'a, 16'b zueinander beanstandet sind, breit genug, um beide Form-Hohlräume 16'a, 16'b gleichzeitig abdecken zu können. Dadurch wird durch ein Eintauchen des Messers 3 von beiden nebeneinanderliegenden Produktsträngen 100 gleichzeitig jeweils eine Scheibe 101 abgetrennt.

Die Rotationsrichtung 20 des Messers ist im vorliegenden Fall entgegen dem Uhrzeigersinn gerichtet.

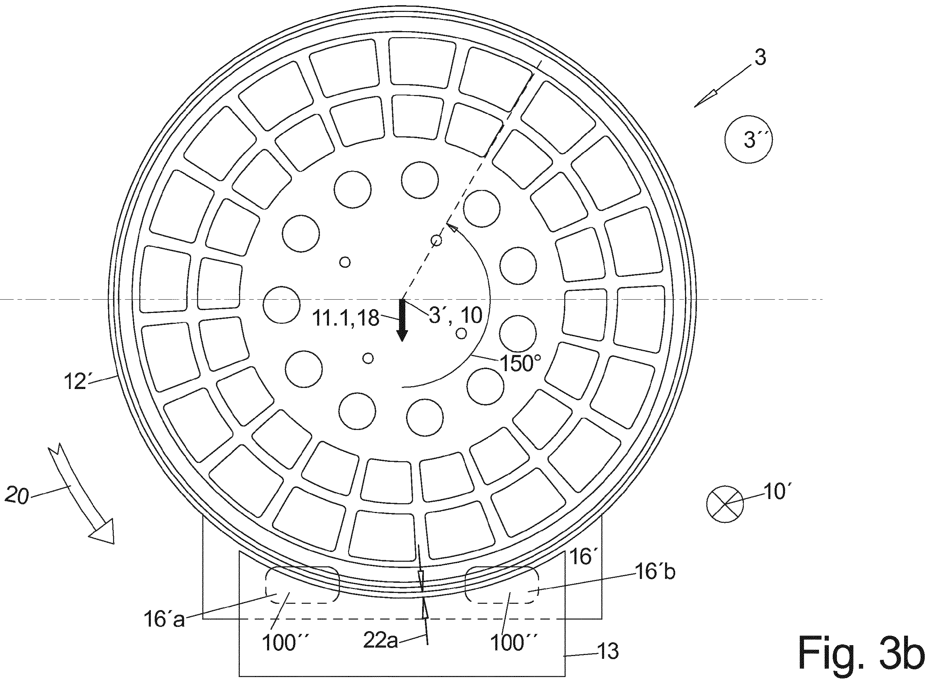

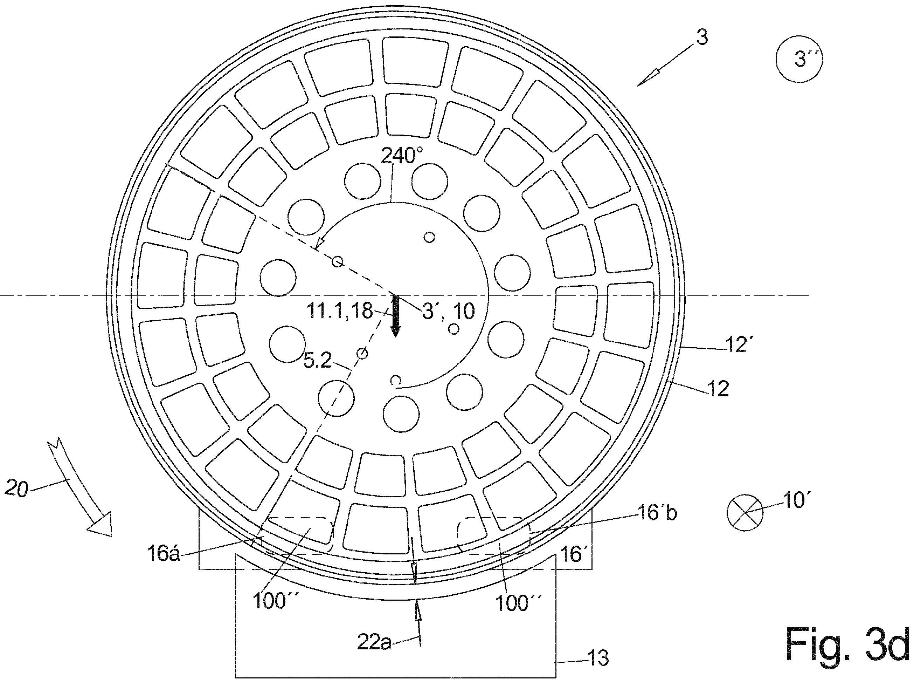

Dabei ist in **Figur 3a** unmittelbar vor Beginn der Eintauchbewegung 18 - wie in der **Figur 2a** - der radiale Abstand 22a annähernd Null, und nimmt mit zunehmender Eintauchbewegung 18 des Messers 3 (**Figuren 3b bis 3d**) zu, so dass er am größten ist, wenn sich der Flugkreis 3.1 des insbesondere kreisscheibenförmigen Messers 3 in der in Eintauchrichtung 18 am weitesten vorwärts gefahrenen, in diesen Figuren tiefsten, Position befindet und die Querschnitte 100" der beiden Produkt-Stränge 100 vollständig durchtrennt hat (**Figur 3d**).

Anschließend bewegt sich gemäß **Figur 3e** das Messer 3 entgegen der Eintauchrichtung 18 in Rückzugsrichtung 18' wieder zurück bis zur Ausgangsposition gemäß **Figur 3f**.

Auch bei einem kreisscheibenförmigen Messer 3, wie in den **Figuren 3a bis 3d** **die sowie 3f** dargestellt, wird das Abtrennen einer Scheibe 101 vorzugsweise während weniger als einer Umdrehung des Messers 3 durchgeführt.

Dies gilt erst recht für den Fall, dass es sich bei dem Messer 3 - wie in **Figur 3e** dargestellt, um ein Messer handelt, welches in Richtung der Messerachse 3' betrachtet keine kreisförmige Umfangskontur besitzt, sondern die Umfangskontur nur über einen Teil als Kreissegment 5 ausgebildet ist, in der die Umfangskante als Schneide 12 ausgebildet ist. An das in RotationsRichtung 20 vordere Ende dieses Kreissegmentes 5 kann sich noch ein kurzer Anschnittbereich 5* anschließen, indem der Umfang des Messers zwar ebenfalls als Schneide 12 ausgebildet ist, jedoch bereits vom Flugkreis 3.1 des Kreissegmentes 5 nach radial innen zurückweicht.

Beide zusammen bilden den Schneidkantenbereich 4a, indem der Umfang als Schneide 12 ausgebildet ist, während der Rest des Umfanges, der innerhalb des Flugkreises 3.1 liegt und von diesem wesentlich weiter zurückweicht, der Restkantenbereich 4b ist, in dem die Umfangskante nicht als Schneide 12 ausgebildet ist.

Anhand der **Figur 3e** wird klar, dass bei einem so gestalteten Messer 3 bereits in der Messer-Stellung gemäß Figur 3e, in der die in Rotationsrichtung 20 die Hinterkante des Schneidkantenbereiches 4a die Querschnitte 100" verlassen hat, das Vorwärtsschieben der darin geführten Produkt-Stränge 100 begonnen werden kann, und damit früher als bei einem kreisscheibenförmigen Messer 3, wodurch die Tot-Zeiten zwischen zwei Schneidvorgängen zusätzlich minimiert werden können.

### BEZUGSZEICHENLISTE

- 1: Schneideinheit
- 2: Grundgestell
- 3: Messer
- 3.1: Flugkreis
- 3': Rotationsachse, Messer-Lotrechte
- 3": Hauptebene
- 4: Außenkante
- 4a: Schneidkantenbereich
- 4b: Restkantenbereich
- 5: Kreissegment
- 5': Krümmungsmittelpunkt
- 6: Krümmungsradius
- 7: radialer Abstand
- 8: Bereich erhöhten Flächengewichtes
- 9: Symmetrielinie, Durchmesserlinie
- 10: axiale Richtung, Längsrichtung
- 10': Zufuhr-Richtung
- 11.1: erste Querrichtung
- 11.2: zweite Querrichtung
- 12: Schneide
- 12a: Schneidkante
- 12.1: Parallelbereich
- 12.2: Schräge, Gleitfläche
- 12a: Schneidkante
- 13: Anschlagplatte
- 13.1: Anschlagfläche
- 13.2: Schräge
- 13a: Umfangsbereich, Funktionskante
- 14: Dicken-Abstand
- 15: Zufuhr-Vorrichtung
- 16: Strang-Führung
- 16a: Auflagefläche
- 16'a, b: Formhohlraum, Formrohr
- 16": vordere Stirnfläche
- 17: Strang-Schieber
- 18: Eintauchrichtung, Eintauchbewegung
- 18': Rückzugsrichtung, Rückzugsbewegung
- 19: Strangantrieb
- 20: Rotationsrichtung
- 21: Greiforgan
- 22: Spalt, Schneidspalt
- 22a: radial Abstand
- 22b: axialer Abstand
- 22'a: Ausgangs-Abstand
- 23: Vertiefung
- 24: Durchgangsbohrung
- 27a: Abhebebewegung
- 27b: Anlagebewegung
- 28: Umlauf Bewegung

- 50: Steuerung
- 100: Produkt-Strang
- 100a: vorderes Ende
- 100": Strang-Querschnitt
- 101: Scheibe

- α: Messerwinkel
- β: Plattenwinkel

- d: Dicke

## Patentansprüche

1. **Schneideinheit** (1) zum Abschneiden von Scheiben (101) von einem sich in Zufuhr-Richtung (10') erstreckenden Produkt-Strang (100) mit
- einem Grundgestell (2),
- einem in einer Eintauchrichtung (25) die quer zur Zufuhr-Richtung (10') verläuft, beweglich am Grundgestell (2) befestigten Messer (3),
- einem beweglich am Grundgestell (2) befestigten Anschlag (13) mit einer Anschlagfläche (13.1) für den Produkt-Strang (100),
- einer Steuerung (50) zum Steuern der Bewegungen aller beweglichen Komponenten der Schneideinheit (1),
**dadurch gekennzeichnet, dass**
- der Anschlag (13) in und entgegen der Eintauchrichtung (18), die eine Komponente parallel zur Hauptebene (3") des Messers (3) umfasst, relativ zum Messer (3) bewegbar am Grundgestell (2), befestigt ist,
- die Steuerung (50) in der Lage ist, den radialen Abstand (22a) zwischen dem Messer (3) und dem Anschlag (13) zu steuern, insbesondere während des Abtrennens einer Scheibe (101) zu steuern.

2. Schneideinheit nach Anspruch 1,
**dadurch gekennzeichnet, dass**
- die Eintauchrichtung (25) in einer ersten, zur Zufuhr-Richtung (10') lotrecht stehenden, Querrichtung (11.1) verläuft,
und/oder
- die Eintauchrichtung (25) parallel zur Hauptebene (3") des Messers (3) verläuft.

3. Schneideinheit nach einem der vorhergehenden Ansprüche,
**dadurch gekennzeichnet, dass**
- der Anschlag eine Anschlagplatte (13) ist,
und/oder
- betrachtet in axialer Richtung (10) sich zwischen der Anschlagfläche (13.1) des Anschlages (13) und dem Messer (3) ein positiver radialer Abstand (22a) vorliegt, und insbesondere der Anschlag (13) abseits, insbesondere vollständig abseits, des Messers (3) angeordnet ist.

4. Schneideinheit nach einem der vorhergehenden Ansprüche,
**dadurch gekennzeichnet, dass**
entweder
- das Messer (3) ein plattenförmiges, um eine Rotationsachse (3') rotierend antreibbares, Messer (3) ist,
- dessen in Richtung der Messerachse (3') betrachtete Umfangskante wenigstens über einen sich in Umfangsrichtung erstreckenden Schneidkantenbereich (4a) als Schneide (12) ausgebildet ist und
- insbesondere die Messerachse (3') parallel zur Zufuhr-Richtung (10') angeordnet ist,
- insbesondere die Eintauchrichtung (18) in radialer Richtung zur Messerachse (3') verläuft,
oder
- das Messer (3) ein streifenförmiges, insbesondere in seiner Haupterstreckungs-Richtung oszillierend antreibbares, Messer (3) ist und
- insbesondere die Eintauchrichtung (25) in der Hauptebene (3") des streifenförmigen Messers (3) verläuft.

5. Schneideinheit nach einem der vorhergehenden Ansprüche,
**dadurch gekennzeichnet, dass**
- die Schneide (12) des rotierenden Messers (3) betrachtet in Richtung der Rotationsachse (3') wenigstens über einen Teil des Schneidkantenbereiches (4a) die Form eines Kreissegmentes (5) aufweist,
- die Rotationsachse (3') im Krümmungsmittelpunkt (5') des Kreissegmentes (5) angeordnet ist,
- der zwischen den Enden des Schneidkantenbereiches (4a) verlaufende Restkantenbereich (4b) des Umfanges innerhalb des Flugkreises des Kreissegmentes (5) liegt.

6. Schneideinheit nach einem der vorhergehenden Ansprüche,
**dadurch gekennzeichnet, dass**
- der konkave Umfangsbereich (13a) der Anschlagplatte (13) als konkaves Kreissegment (5) gestaltet ist,
- insbesondere mit dem gleichen oder einem höchstens um 20 %, besser höchstens um 10 %, besser höchstens um 5 %, von dem Flugkreis (3.1) des Messers (3), insbesondere dem Flugkreis (3.1) des als Schneide (12) ausgebildeten Kreissegmentes (5), abweichenden Radius.

7. Schneideinheit nach einem der vorhergehenden Ansprüche,
**dadurch gekennzeichnet, dass**
- betrachtet in einer, zur ersten Querrichtung (11.1) als auch zur Längsrichtung (10) lotrecht stehenden, zweiten Querrichtung (11.2) die Anschlagfläche (13.1) der Anschlagplatte (13) einen, insbesondere einstellbaren, axialen Abstand (22b) zur Messerebene (3" aufweist, der die Dicke (d) der abzuschneidenden Scheibe (101) bestimmt,
und/oder
- die Anschlagplatte (13) in Rotationsrichtung (20) des Messers (3) still steht.

8. Schneideinheit nach einem der vorhergehenden Ansprüche,
**dadurch gekennzeichnet, dass**
- die Schneide (12) eine an dem insbesondere plattenförmigen Messer (3) nur einseitig angeschliffene Schneide (12) ist,
- insbesondere das Messer (3) nur auf der der Anschlagplatte (13) zugewandten Seite angeschliffen ist.

9. Schneideinheit nach einem der vorhergehenden Ansprüche,
**dadurch gekennzeichnet, dass**
- die Schneideinheit (1) eine Strang-Führung (16) zum Führen des Produkt-Stranges (100) in Zufuhrrichtung (10') umfasst sowie insbesondere einen Strang-Antrieb (19) zum Bewegen des Produkt-Stranges (100) entlang der Strang-Führung (16) in Vorschubrichtung (10'a) in Richtung Messer (3) umfasst, die ebenfalls am Grundgestell (2) befestigt sind,
und/oder
- die Strang-Führung (16) wenigstens eine Auflagefläche (16a) für den aufzuschneidenden Strang, insbesondere wenigstens ein umfänglich geschlossenes Führungsrohr (16'a, b), umfasst,
- die Strang-Führung (16) mit ihrem in Zufuhr-Richtung (10') vorderen Ende in Zufuhr-Richtung (10') auf der der Anschlagplatte (13) gegenüberliegenden Seite des Messers (3) endet und sich von dort vom Messer (3) weg zu ihrem hinteren Ende erstreckt.

10. Schneideinheit nach einem der vorhergehenden Ansprüche,
**dadurch gekennzeichnet, dass**
- der Strangantrieb (19) einen linear in Zufuhr-Richtung (10') der Strang-Führung (16) beweglichen Strang-Schieber (17) umfasst,
- der insbesondere an seinem vorderen, dem Messer (3) zugewandten, Ende Greiforgane (21) zum Ergreifen und Festhalten des Stranges aufweist.

11. Schneideinheit nach einem der vorhergehenden Ansprüche,
**dadurch gekennzeichnet, dass**
bei einem rotierenden Messer (3), in Zufuhr-Richtung (10') betrachtet, das insbesondere plattenförmige Messer (3) so angeordnet und in einer Querrichtung, der Eintauchrichtung (25), zur Zufuhr-Richtung (10') so beweglich ist, dass das Messer (3)
- in einer Schneidstellung den Querschnitt (100") des zugeführten Produkt-Stranges (100), insbesondere den Querschnitt des Führungsrohres (16'a), vollständig abdecken kann und
- in einer Vorschubstellung vollständig außerhalb dieses Querschnittes (100") angeordnet werden kann.

12. Schneideinheit nach einem der vorhergehenden Ansprüche,
**dadurch gekennzeichnet, dass**
in Zufuhr-Richtung (10') betrachtet die Anschlagplatte (13) so angeordnet und in einer Querrichtung, der Eintauchrichtung (18), zur Vorschubrichtung (10') so beweglich ist, dass die Anschlagplatte (13)
- in einer Schneidstellung mit dem Querschnitt (100") des zugeführten Produkt-Stranges (100), insbesondere dem Querschnitt (100") des Führungsrohres (16'a, b), wenigstens teilweise überlappt
und/oder
- in einer Vorschubstellung mit dem Querschnitt (100") des zugeführten Produkt-Stranges (100) mindestens teilweise überlappt.

13. **Verfahren** zum Abschneiden von Scheiben (101) mittels eines Messers (3) mit dessen Schneide (12) von dem vorderen Ende (100a) eines Produkt-Stranges (100), indem
- der Produkt-Strang (100) in Vorschub-Richtung (10'a) bis zur Anlage an einer Anschlagfläche (13.1) eines Anschlages (13) vorwärts geschoben wird,
- das entgegen der Vorschub-Richtung (10'a) von der Anschlagfläche (13. 1) um einen axialen Abstand (22b) beabstandete Messer (3) in Eintauchrichtung (18) mit seiner Schneide (12) den Querschnitt (100") des Produkt-Stranges (100) durchläuft,
- dabei die zunehmend abgetrennte Scheibe (101) sich durch einen Spalt (26) zwischen Anschlagplatte (13) und Messer (3) hindurch bewegt wird und
- die abgetrennte Scheibe (101), über eine Funktionskante (13a) des Anschlages (13), abkippt,
- die Funktionskante (13a) von dem Flugkreis (3.1) des Messers (3) radial bezüglich der Rotationsachse (3') um einen radialen Abstand (26a) beabstandet ist,
**dadurch gekennzeichnet, dass**
der radiale Abstand (26a) verändert wird, während die Schneide (12) den Querschnitt (100") des Produkt-Stranges (100) durchläuft.

14. Verfahren nach Anspruch 13,
**dadurch gekennzeichnet, dass**
- der radiale Abstand (26a) gegen Ende der Schneidbewegung vergrößert wird und nach Beenden der Schneidbewegung und vor dem Kontaktieren der Anschlagplatte (13) mit dem vorgeschobenen Produkt-Strang (100) auf einen radialen Ausgangs-Abstand (26'a) zurückgestellt wird.
und/oder
- der radiale Abstand (26a) so gesteuert wird, dass bei Beginn des Abtrennvorganges, also Eintauchen der Schneide (12) in den Produkt-Strang (100), keine radiale Überlappung von Anschlagplatte (13) und dem Flugkreis (3.1) des Messers (3) mehr gegeben ist, sondern der radiale Abstand (26a) Null ist oder einen positiven Wert aufweist.

15. Verfahren nach einem der vorhergehenden Verfahrensansprüche,
**dadurch gekennzeichnet, dass**
die Rückführung des radialen Abstandes (26a) auf den radialen Soll-Abstand (22'a) begonnen wird,
- bevor das Messer (3) seine Vorwärtsbewegung in Eintauchrichtung (25) beendet,
und/oder
- bevor das Messer (3) nach dem Abtrennen der Scheibe (101) eine Abhebebewegung vom Produkt-Strang (100) in der Messer-Lotrechten (3'), oder in Vorschubrichtung (10'a) des Produkt-Stranges (100), vollzieht.

16. Verfahren nach einem der vorhergehenden Verfahrensansprüche,
**dadurch gekennzeichnet, dass**
die Rückführung des radialen Abstandes (26a) auf den radialen Soll-Abstand (22'a) beendet wird,
- während oder spätestens nach dem Beenden dieser Abhebebewegung und/oder
- unmittelbar nachdem das Abtrennen der Scheibe (101) beendet ist, und/oder
- vorzugsweise spätestens beendet wird, wenn der vorwärts geschobene Produkt-Strang (100) die Anschlagfläche (13.1) der Anschlagplatte erreicht.

17. Verfahren nach einem der vorhergehenden Verfahrensansprüche,
**dadurch gekennzeichnet, dass**
bei einem rotierenden Messer (3) mit unrunder Umfangs-Kontur, die innerhalb des Flugkreises (3.1) der Schneide (12) des Messers (3) liegt, die Rückbewegung der Anschlagplatte (13) relativ zum Messer (3) in Richtung radialem Ausgangs-Abstand (26'a) begonnen wird nach dem vollständigen Abtrennen der Scheibe (101) und noch bevor die Überlappung des Flugkreises (3.1) des Messers (3) und dem Querschnitt (100") des Produkt-Stranges (100) beendet ist.

## Claims

1. A **cutting unit** (1) for cutting slices (101) from a product strand (100) extending in a feed direction (10'), the cutting unit comprising:
- a base frame (2),
- a blade (3) that is attached to the base frame (2) and movable in a penetration direction (18) that extends transversal to the feed direction (10'),
- a stop (13) that is movably attached to the base frame (2) and includes a stop surface (13.1) for the product strand (100),
- a control (50) for controlling movements of all movable components of the cutting unit (1),
**characterized in that**
- the stop (13) is movable relative to the blade (3) attached to the base frame (2), wherein the movement is performed in and opposite to the penetration direction (18) which includes a component parallel to the main plane (3") of the blade (3),
- the control (50) is configured to control the radial distance (22a) between the blade (3) and the stop (13), in particular while cutting off a slice (101).

2. A cutting unit (1) according to claim 1,
**characterized in that**
- the penetration direction (18) is oriented in a first transversal direction (11.1) that is perpendicular to the feed direction (10'),
and/or
- the penetration direction (18) is parallel to the main plane (3") of the blade (3).

3. The cutting unit (1) according to one of the preceding claims,
**characterized in that**
- the stop is a stop plate (13)
and/or
- a positive radial distance (22a) is provided in the axial direction (10) between the stop surface (13.1) of the stop (13) and the blade (3), and in particular the stop (13) is arranged remote, in particular completely remote from the blade (3).

4. The cutting unit (1) according to one of the preceding claims,
**characterized in that**
either
- the blade (3) is a plate shaped blade (3) that is drivable to rotate about a rotation axis (3'),
- whose circumferential edge viewed in a direction of the blade axis (3') is configured as a blade edge (12) at least over a circumferentially extending cutting edge portion (4a), and
- in particular the blade axis (3') is arranged parallel to the feed direction (10'),
- in particular the penetration direction (18) extends in a radial direction relative to the blade axis (3'),
or
- the blade (3) is a strip-shaped blade (3), in particular a blade (3) that is drivable to oscillate in a main extension direction, and
- in particular the penetration direction (18) extends in the main plane (3") of the strip shaped blade (3).

5. The cutting unit (1) according to one of the preceding claims,
**characterized in that**
- the cutting edge (12) of the rotating blade (3) viewed in a direction of the rotation axis (3') is shaped as a circular segment (5) at least over a portion of the cutting edge portion (4a),
- the rotation axis (3') is arranged in a curvature center (5') of the circular segment (5),
- a residual edge portion (4b) of the circumference that extends between the ends of the cutting edge portion (4a) is arranged within the flight circle of the circular segment (5).

6. The cutting unit (1) according to one of the preceding claims,
**characterized in that**
- the concave circumferential portion (13a) of the stop plate (13) is configured as a concave circular segment (5),
- in particular with a radius that is identical to or deviates by at the most 20% greater than, better at the most 10% greater than, better at the most 5% greater than, from the flight circle (3.1) of the blade, in particular the flight circle (3.1) of the circular segment (5) that is configured as a blade edge (12).

7. A cutting unit (1) according to one of the preceding claims,
**characterized in that**
- the stop surface (13.1) of the stop plate (13) defines a particularly adjustable axial distance (22b) from the blade plane (3") which defines a thickness (d) of the slice (101) that is to be cut off,
and/or
- the stop plate (13) is stationary in the rotation direction (20) of the blade (3).

8. A cutting unit (1) according to one of the preceding claims,
**characterized in that**
- the blade edge (12) is ground only on one side of the plate shaped blade (3),
- in particular the blade (3) is ground only on a side that is oriented towards the stop plate (13).

9. A cutting unit (1) according to one of the preceding claims,
**characterized in that**
- the cutting unit (1) includes a strand guidance (16) for guiding the product strand (100) in the feed direction (10'), and in particular a strand drive (19) for moving the product strand (100) along the strand guidance (16) in the feed direction (10'a) towards the blade (3) which are also attached at the base frame (2),
and/or
- the strand guidance (16) includes at least one support surface (16a) for the strand to be cut up, in particular at least one circumferentially closed guiding tube (16'a, b),
- the strand guidance (16) terminates with its front end in the feed direction (10') on a side of the blade (3) that is arranged opposite to the stop plate (13) and which extends from there away from the blade (3) to its rear end.

10. The cutting unit (1) according to one of the preceding claims,
**characterized in that**
- the strand drive (19) includes a strand pusher (17) that is moveable in a linear manner in a feed direction (10') of the strand guidance (16),
- the strand pusher (17) includes grippers (21) in particular at its end oriented towards the blade (3) for gripping and retaining the strand.

11. The cutting unit (1) according to one of the preceding claims,
**characterized in that**
the in particular plate shaped blade (3) is arranged relative to the feed direction (10') and movable in a transversal direction, the penetration direction (18), relative to the feed direction (10') so that the blade (3),
- can completely cover in a cutting position the cross section (100") of the fed product strand (100), in particular the cross section of the support tube (16'a), and
- can be arranged in a feed position completely outside of the cross section (100').

12. The cutting unit (1) according to one of the preceding claims,
**characterized in that**
viewed in the feed direction (10') the stop plate (13) is arranged so that and movable in a transversal direction, the penetration direction (18) relative to the feed direction (10') so that the stop plate (13),
- overlaps at least partially in a cutting position with the cross section (100") of the fed product strand (100), in particular the cross section (100") of the guiding tube (16'a, b)
and/or
- overlaps at least partially in a feed position with the cross section (100") of the fed product strand (100).

13. A **method** for cutting off slices (101) by a blade (3) using its blade edge (12) from a front end (100a) of a product strand (100), the method comprising the steps:
- moving the product strand (100) forward in the feed direction (10'a) until it contacts a stop surface (13.1) of a stop (13),
- the blade (3) that is offset against the feed direction (10'a) from the stop surface (13.1) by an axial distance (22b) moving in the penetration direction (18) with its blade edge (12) through the cross section (100") of the product strand (100),
- the increasingly cut off slice (101) being moved through a gap (26) between the stop plate (13) and the blade (3), and
- the cut off slice (101) tilting over a functional edge (13a) of the stop (13),
- the functional edge (13a) being offset from the flight circle (3.1) of the blade (3) radially with respect to the rotation axis (3') by a radial distance (26a),
**characterized in that**
a radial distance (26a) being changed while the cutting edge (12) runs through the cross section (100") of the product strand (100).

14. The method according to claim 13,
**characterized in that**
- the radial distance (26a) is increased towards an end of the cutting movement and the radial distance is reset to a radial starting distance (26'a) after completing the cutting movement and before contacting the stop plate (13) with the advanced product strand (100)
and/or
- the radial distance (26a) is controlled so that no radial overlap of the stop plate (13) and the flight circle (3.1) of the blade (3) is provided anymore at a beginning of the cut off process, thus penetration of the blade edge (12) into the product strand (100), but the radial distance (26a) is zero or has a positive value.

15. The method according to one of the preceding method claims,
**characterized in that**
resetting the radial distance to the nominal radial distance (22'a) is commenced,
- before the blade (3) has completed its forward movement in the penetration direction (18),
and/or
- before the blade (3) performs a lift off movement from the product strand (100) in the blade orthogonal (3') or in feed direction (10a) of the product strand (100) after cutting off the slice (101).

16. The method according to one of the preceding method claims,
**characterized in that**
resetting the radial distance (26a) to the nominal radial distance (22a) is completed,
- during or at least after completing the lift off movement,
and/or
- directly after completing cutting off the slice (101),
and/or
- is advantageously completed at the latest when the advanced product strand (100) reaches the stop surface (13.1) of the stop plate.

17. The method according to one of the preceding method claims,
**characterized in that**
the backward movement of the stop plate (13) relative to the blade (3) in a direction towards the radial starting distance (26'a) for a rotating blade (3) with a non-circular circumferential contour that is arranged within the flight circle (3.1) of the cutting edge (12) of the blade (3) is commenced after a complete cut off of the slice (101) and before the overlapping of the flight circle (3.1) of the blade (3) and the cross section (100") of the product strand (100) is completed.

## Revendications

1. **Unité de coupe** (1) pour couper des tranches (101) d'un cordon de produit (100) s'étendant dans la direction d'alimentation (10'), avec
- un châssis de base (2),
- un couteau (3) fixé de manière mobile au châssis de base (2) dans une direction d'immersion (25) qui s'étend transversalement à la direction d'alimentation (10'),
- une butée (13) montée mobile sur le châssis de base (2) avec une surface de butée (13.1) pour le cordon de produit (100),
- une commande (50) pour commander les mouvements de tous les composants mobiles de l'unité de coupe (1),
**caractérisé en ce que**
- la butée (13) est montée sur le châssis de base (2) de manière à être mobile par rapport au couteau (3) dans et contre la direction d'immersion (18), qui comprend un composant parallèle au plan principal (3") du couteau (3),
- la commande (50) est capable de commander la distance radiale (22a) entre le couteau (3) et la butée (13), en particulier pendant la séparation d'une tranche (101).

2. Unité de coupe selon la revendication 1,
**caractérisé en ce que**
- la direction d'immersion (25) s'étend dans une première direction transversale (11.1) perpendiculaire à la direction d'alimentation (10'),
et/ou
- la direction d'immersion (25) est parallèle au plan principal (3") du couteau (3).

3. Unité de coupe selon l'une des exigences précédentes,
**caractérisé en ce que**
- la butée est une plaque de butée (13),
et/ou
- une distance radiale positive (22a) est présente entre la surface de butée (13.1) de la butée (13) et le couteau (3), vu dans la direction axiale (10), et en particulier la butée (13) est disposée à l'écart, en particulier complètement à l'écart, du couteau (3).

4. Unité de coupe selon l'une des revendications précédentes,
**caractérisé en ce que**
ou
- le couteau (3) est un couteau en forme de plaque (3) qui peut être entraîné en rotation autour d'un axe de rotation (3'),
- dont le bord périphérique, vu dans la direction de l'axe du couteau (3'), est formé en tant que bord tranchant (12) au moins sur une zone de bord tranchant (4a) s'étendant dans la direction circonférentielle, et
- en particulier l'axe du couteau (3') est disposé parallèlement à la direction d'alimentation (10'),
- en particulier la direction d'immersion (18) s'étend dans la direction radiale par rapport à l'axe du couteau (3'),
ou
- le couteau (3) est un couteau en forme de bande (3) qui peut en particulier être entraîné en oscillation dans sa direction d'extension principale, et
- en particulier la direction d'immersion (25) s'étend dans le plan principal (3") du couteau en forme de bande (3).

5. Unité de coupe selon l'une quelconque des revendications précédentes,
**caractérisé en ce que**
- le bord tranchant (12) du couteau rotatif (3), vu dans la direction de l'axe de rotation (3'), a la forme d'un segment circulaire (5) au moins sur une partie de la zone de bord tranchant (4a),
- l'axe de rotation (3') est disposé au centre de courbure (5') du segment circulaire (5),
- la zone de bord résiduel (4b) de la circonférence s'étendant entre les extrémités de la zone de bord tranchant (4a) se trouve dans le cercle de vol du segment circulaire (5).

6. Unité de coupe selon l'une quelconque des revendications précédentes,
**caractérisé en ce que**
- la zone circonférentielle concave (13a) de la plaque de butée (13) est conçue comme un segment circulaire concave (5),
- en particulier avec le même rayon ou un rayon différent du cercle de vol (3.1) du couteau (3), en particulier du cercle de vol (3.1) du segment circulaire (5) conçu comme bord tranchant (12), d'un maximum de 20%, meilleur de 10% maximum, meilleur de 5% maximum.

7. Unité de coupe selon l'une quelconque des revendications précédentes,
**caractérisé en ce que**
- vue dans une deuxième direction transversale (11.2) perpendiculaire à la première direction transversale (11.1) ainsi qu'à la direction longitudinale (10), la surface de butée (13.1) de la plaque de butée (13) présente une distance axiale (22b), en particulier réglable, au plan du couteau (3") qui détermine l'épaisseur (d) de la tranche (101) à couper,
et/ou
- la plaque de butée (13) est fixe dans la direction de rotation (20) du couteau (3).

8. Unité de coupe selon l'une quelconque des revendications précédentes,
**caractérisé en ce que**
- le bord tranchant (12) est un bord tranchant (12) affûtée d'un seul côté sur le couteau en particulier en forme de plaque (3),
- en particulier le couteau (3) n'est affûtée que du côté tourné vers la plaque de butée (13).

9. Unité de coupe selon l'une quelconque des revendications précédentes,
**caractérisé en ce que**
- l'unité de coupe (1) comprend un guidage de cordon (16) pour guider le cordon de produit (100) dans la direction d'avance (10') et, en particulier, un entraînement de cordon (19) pour déplacer le cordon de produit (100) le long du guidage de cordon (16) dans la direction d'alimentation (10'a) dans la direction des couteaux (3), qui sont également fixées au châssis (2),
et/ou
- le guidage de cordon (16) comprend au moins une surface d'appui (16a) pour le cordon à découper, en particulier au moins un tube de guidage (16'a, b) fermé sur sa circonférence,
- le guide de cordon (16) s'étend avec son extrémité avant dans la direction d'alimentation (10') dans la direction d'alimentation (10') sur le côté du couteau (3) opposé à la plaque de butée (13) et s'étend de là loin du couteau (3) à son extrémité arrière.

10. Unité de coupe selon l'une des revendications précédentes,
**caractérisé en ce que**
- l'entraînement de cordon (19) comprend un pousseur de cordon (17) mobile linéairement dans la direction d'alimentation (10') du guidage de cordon (16),
- qui, en particulier à son extrémité avant tournée vers le couteau (3), présente des éléments de préhension (21) pour saisir et maintenir le cordon.

11. Unité de coupe selon l'une quelconque des revendications précédentes,
**caractérisé en ce que**
dans le cas d'un couteau rotatif (3), vu dans la direction d'alimentation (10'), le couteau en particulier en forme de plaque (3) est disposé et mobile dans une direction transversale, la direction d'insertion (25), par rapport à la direction d'alimentation (10') de telle manière que le couteau (3)
- en position de coupe, peut recouvrir complètement la section transversale (100") du cordon de produit alimenté (100), en particulier la section transversale du tube de guidage (16'a), et
- peut être disposé complètement à l'extérieur de cette section (100") dans une position d'avance.

12. Unité de coupe selon l'une des exigences précédentes,
**caractérisé en ce que**
vue dans la direction d'alimentation (10') la plaque de butée (13) est disposée et mobile dans une direction transversale, la direction d'immersion (18), par rapport à la direction d'avance (10') de telle sorte que la plaque de butée (13)
- se chevauche au moins partiellement dans une position de coupe avec la section transversale (100") du cordon de produit alimenté (100), en particulier la section transversale (100") du tube de guidage (16'a, b)
et/ou
- se chevauche au moins partiellement avec la section transversale (100") du cordon de produit alimenté (100) dans une position d'avance.

13. **Procédé** pour couper des tranches (101) au moyen d'un couteau (3) avec son bord tranchant (12) à partir de l'extrémité avant (100a) d'un cordon de produit (100), en ce que
- le cordon de produit (100) est poussé vers l'avant dans la direction d'avance (10'a) jusqu'à ce qu'il repose contre une surface de butée (13.1) d'une butée (13),
- le couteau (3), qui est espacé d'une distance axiale (22b) de la surface de butée (13.1) dans la direction opposée à la direction d'avance (10'a), traverse la section transversale (100") du cordon de produit (100) avec son bord tranchant (12) dans la direction d'immersion (18),
- la tranche (101) de plus en plus séparée est déplacée à travers un espace (26) entre la plaque de butée (13) et le couteau (3), et
- la tranche séparée (101) bascule sur un bord fonctionnel (13a) de la butée (13),
- le bord fonctionnel (13a) est espacé radialement du cercle de vol (3.1) du couteau (3) d'une distance radiale (26a) par rapport à l'axe de rotation (3'),
**caractérisé en ce que**
la distance radiale (26a) est modifiée lorsque le bord tranchant (12) traverse la section transversale (100") du cordon de produit (100).

14. Le procédé selon la revendication 13,
**caractérisé en ce que**
- la distance radiale (26a) est augmentée vers la fin du mouvement de coupe et après la fin du mouvement de coupe et avant d'entrer en contact avec la plaque de butée (13) avec le cordon de produit avancé (100) est remise à une distance radiale initiale (26'a),
et/ou
- la distance radiale (26a) est commandée de telle sorte qu'au début du processus de séparation, c'est-à-dire lorsque le bord tranchant (12) est immergée dans le cordon de produit (100), il n'y a plus de chevauchement radial entre la plaque de butée (13) et le cercle de vol (3.1) du couteau (3), mais la distance radiale (26a) est nulle ou présente une valeur positive.

15. Procédé selon l'une quelconque des revendications de procédé précédentes,
**caractérisé en ce que**
la restitution de la distance radiale (26a) à la distance radiale nominale (22'a) commence,
- avant que le couteau (3) n'arrête son mouvement vers l'avant dans la direction d'immersion (25),
et/ou
- avant que le couteau (3), après avoir séparé la tranche (101), effectue un mouvement de levage du cordon de produit (100) dans la verticale du couteau (3') ou dans la direction d'avance (10'a) du cordon de produit (100).

16. Procédé selon l'une quelconque des revendications de procédé précédentes,
**caractérisé en ce que**
la restitution de la distance radiale (26a) à la distance radiale nominale (22'a) est terminée,
- pendant ou au plus tard après la fin de ce mouvement de levage
et/ou
- immédiatement après la fin de la séparation de la tranche (101),
et/ou
- se termine de préférence au plus tard lorsque le cordon de produit (100) poussé vers l'avant atteint la surface de butée (13.1) de la plaque de butée.

17. Procédé selon l'une quelconque des revendications de procédé précédentes,
**caractérisé en ce que**
dans le cas d'un couteau rotatif (3) ayant un contour périphérique non circulaire qui se trouve à l'intérieur du cercle de vol (3.1) du bord tranchant (12) du couteau (3), le mouvement de retour de la plaque de butée (13) par rapport au couteau (3) dans la direction de la distance radiale initiale (26'a) commence après que la tranche (101) a été complètement séparée et même avant la fin du chevauchement du cercle de vol (3.1) du couteau (3) et la section (100") du cordon de produit (100).
